# EUROPEAN PATENT SPECIFICATION

(11) **EP 3 795 229 B1**
(45) Date of publication and mention of the grant of the patent: **23.07.2025**
(21) Application number: 20197233.8
(22) Date of filing: 21.09.2020
(51) Int. Cl.: B01D 33/80, B01D 33/044, B01D 29/09

(54) **BELT FILTER FOR LIQUID FILTRATION**
BANDFILTER FÜR DIE FLÜSSIGFILTRATION
FILTRE À BANDE POUR LA FILTRATION DE LIQUIDE

(30) Priority: 19.09.2019 IT 201900016682
(43) Date of publication of application: 24.03.2021
(73) Proprietor: Alfa Water S.r.l., 32036 Sedico (BL) (IT)
(72) Inventor: Cendron, Nicola, 32036 Sedico BL (IT)
(74) Representative: Perani & Partners S.p.A.

(56) References cited:
- EP-A1- 3 372 293
- DE-B3- 102011 100 509
- US-A1- 2013 199 973
- US-B1- 6 189 703

## Description

The present invention relates to a filtering device of the belt type for liquids, also called band filter, namely a device adapted to filter liquids by a filtering material belt. Such belt is passed through by a liquid flow to retain impurities and particulate dispersed therein. Usually the liquid to be filtered is water, while the impurities to be retained may be of any type, such as oil particles, grease, various emulsions, powders and others. Such device is usefully employed in industrial depuration plants, for instance in mechanical workshops where water used for cooling machinery is contaminated by processing residues.

It is known in the state of the art a filtering device for liquids. The known device comprises a first chamber, which has an inlet opening to receive liquid to be filtered. The device further comprises a second chamber, which has an outlet opening configured to discharge the filtered liquid. A filtering area is defined between the first and the second chamber.

In use, filtering material is introduced into the filtering area. Such material is typically an endless belt of paper, tissue or the like. In particular, the filtering material is unwound from a roller. The portion of such material inserted in the filtering area intercepts the liquid flow to be filtered, such to retain impurities.

In use, the filtering material tends to saturate with particulate, slowing down the liquid flow. When the flow falls beyond a preset limit, the belt portion being used is considered as saturated. The belt is thus further unwound so as to make the already saturated portion advance replacing it with a new portion of filtering material.

Disadvantageously, the efficiency of this type of filter depends on the fluid pressure upstream of the filtering area. In practice, such pressure is given by the pressure difference present between the first chamber and the discharge opening of the second chamber, therefore such parameter constitutes a limitation of the filter performance. It is not possible to increase the pressure by sucking the fluid with a pump, as a significant amount of air would be thereby sucked.

US 6189703 discloses an endless media filtration system, with a pair of side walls, two containment discs rotatably mounted on a shaft between the side walls, and an endless loop filter media belt supported on an endless loop carrier belt. A media belt is attached to the carrier belt.

US 20130199973 discloses a filter device for separating a mixture of solid substance and a liquid, namely another example of an endless media filtration system.

### SUMMARY OF THE INVENTION

Within this framework, the technical task underlying the present invention is to propose a filtering device for liquids that overcomes the above mentioned drawbacks of the prior art.

In particular, it is the object of the present invention to make available a filtering device for liquids capable of enabling a significant increase in efficiency.

The specified technical task and the specified purposes are substantially reached by a filtering device for liquids comprising the technical characteristics set forth in one or more enclosed claims.

In particular a filtering device for liquids according to the present invention comprises a first chamber having an inlet opening and configured to receive liquid to be filtered.

A second chamber has an outlet opening and is configured to discharge filtered liquid.

A filtering area is defined between the first and the second chamber. The filtering area is configured to receive a filtering belt.

The first chamber is defined at least partially by a pair of walls. Such walls are configured to rotate around an axis of rotation. The axis of rotation joins centres of the walls and is arranged perpendicular to both walls. Furthermore the walls each have a respective edge, which is configured to be pressed tightly against the filtering belt to drag it. The axis of rotation is oriented perpendicular to an advancement direction of the filtering belt.

The perimeter wall comprises a grid for the passage of the filtered liquid, the grid extending over a surface equal to or less than 50% of the perimeter wall.

Such device overcomes the technical problem in that the sealing formed between the walls of the first chamber and the filtering belt allows to apply a suction pump in the second chamber, thus increasing the pressure exerted by the liquid on the filtering belt, other conditions being equal. Consequently, the device has a greater efficiency than already known filtering systems.

Advantageously, the second chamber is fluid-tightly closed, except for the outlet opening and the connection with the first chamber. Thereby, the effect of the action of the suction pump on the pressure difference is maximised at the filtering belt.

### LIST OF FIGURES

Further characteristics and advantages of the present invention will be more evident from the indicative, and therefore non-limiting, description of a preferred, though not exclusive, embodiment of a filtering device for liquids, as shown in the appended drawings wherein:

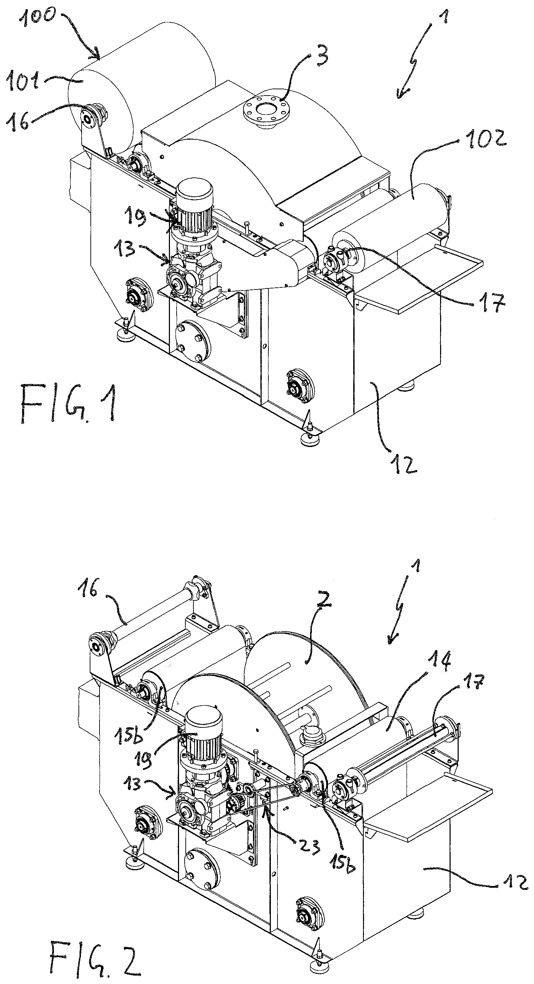

- Figure 1 is a front perspective view of a filtering device for liquids according to the present invention;

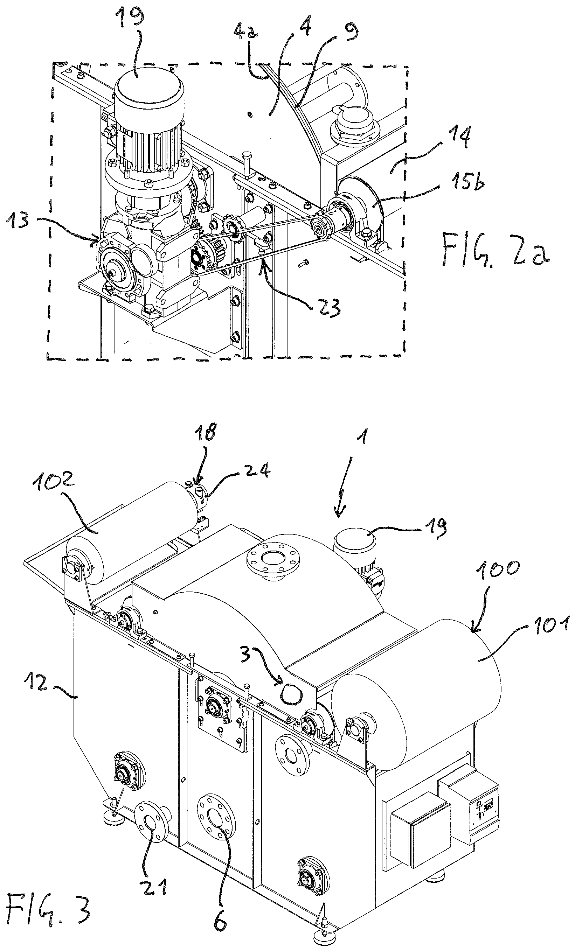

- Figure 2 is a front perspective view of the device of Figure 1 with some parts removed to better show others;
- Figure 2a is an enlarged view of a detail of Figure 2;
- Figure 3 is a partially sectioned rear perspective view of the device of Figures 1 and 2;
- Figure 4 is a rear partially sectioned perspective view of the device of Figures 1 and 2; and
- Figures 5 and 6 are perspective views respectively of a first and a second detail of the device of Figures 1 and 2.

### DETAILED DESCRIPTION

With reference to the enclosed drawings, with reference number 1 is indicated a filtering device for liquids according to the present invention. Such device is of the belt type, namely it operates using a filtering material belt 100. Such filtering belt 100 is unwound from a first roller 101, inserted in a filtering area 7 where the filtering operation takes place, and, once saturated with material, rewound in a second roller 102. In use, the filtering belt 100 is periodically advanced along an advancement direction "B"

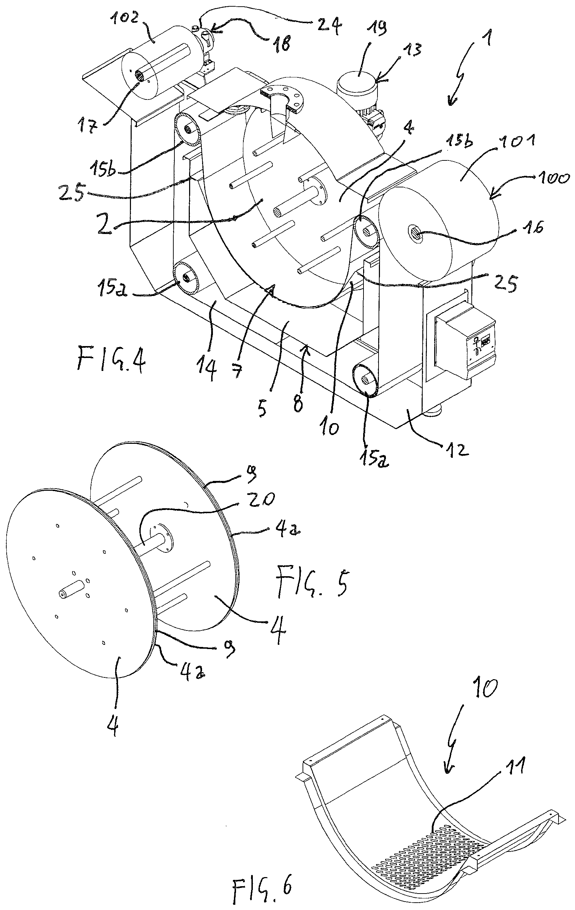

Referring in particular to figure 4, the device 1 comprises a first chamber 2. Such first chamber 2 has an inlet opening 3, which is configured to receive liquid to be filtered. The first chamber 2 is defined at least partially by a pair of walls 4, which are configured to rotate around an axis of rotation "A".

In greater detail, the walls 4 are preferably circular. In the invention, the axis of rotation "A" joins the centres of the walls 4, and it is arranged perpendicular to both walls 4. Still in the invention, the axis of rotation "A" is oriented such to be perpendicular to the advancement direction "B" of the filtering belt 100.

The walls 4 each have a respective edge 4a. Such edge is configured to be pressed tightly against the filtering belt 100, so as to make it advance. It must be noted that each wall 4 is provided with a respective gasket 9 placed at the edge 4a. Such gaskets 9 are arranged to come into contact with the filtering belt 100, so as to avoid outward leakages.

It must be noted that the device 1 comprises first movement means 13 that are active on the walls 4 such to rotate them around the already mentioned axis of rotation "A". Such first movement means may for example comprise a first motor 19, preferably electric, connected to a shaft 20 arranged along the mentioned axis of rotation "A" and connected to the walls 4.

Advantageously the first chamber 2 comprises one or more level sensors (not shown) such sensors are able to detect at least when the liquid reaches the minimum level and the maximum level inside the chamber 2, and are preferably able to measure the exact level. Such data are used to assess if it is necessary to make the filtering belt 100 advance.

The device 1 is further provided with a second chamber 5. Such second chamber 5 has an outlet opening 6, which is arranged to discharge filtered liquid. The mentioned filtering area 7 is arranged between the first 2 and the second chamber 5. In use, the liquid to be purified flows from the first 2 to the second chamber 5, passing through the filtering area 7 such that the filtering belt 100 inserted therein may retain the dispersions within the fluid.

Referring in particular to figure 4, the second chamber 5 is defined at least partially by an inner tank 8. Such inner tank 8 is arranged under the first chamber 2 so that the liquid can flow by gravity. In addition, suction means (not shown) may be active downstream of the outlet opening 6, so as to increase the pressure of the liquid at the filtering belt 100.

The inner tank 8 is inserted inside an outer tank 12, which has the function to collect further possible leakages and/or dragging of filtering and/or filtered liquid and to reintroduce them into the above described first chamber 2. For this purpose, the outer tank 12 is provided with a drainage opening 21 which, in use, is put into fluid communication directly or indirectly with the first chamber 2. The outer tank 12 further comprises one or more level sensors (not shown), which have the function of signalling a maximum level being reached.

According to the invention, the second chamber 5 has a perimeter wall 10. Such perimeter wall 10 is arranged at the filtering area 7, and circumferentially faces the walls 4 of the first chamber 2. In other words, the perimeter wall 10 partially surrounds the walls 4 of the first chamber 2.

It must be noted that the perimeter wall 10 is fluid-tightly connected to the inner tank 8. In particular, the second chamber 5 has at least two fastening areas 25 wherein the perimeter wall 10 is fastened to the inner tank 8. The second chamber 5 comprises a pair of additional gaskets (not shown) each placed at a respective fastening area 25.

In the invention, the perimeter wall 10 comprises a grid 11 for the passage of the filtered liquid. The grid 11 extends over a surface equal to or less than 50% of the perimeter wall 10.

According to the present invention, the device 1 comprises a conveyor belt 14, one portion of which is inserted into the filtering area 7. Such conveyor belt 14 is preferably of the type made with polymeric links, such that it is permeable to the liquid to be filtered without hindering it. In particular, the conveyor belt 14 portion placed in the filtering area 7 is placed between the perimeter wall 10 of the second chamber 5 and the walls 4 of the first chamber 2. In use, the conveyor belt 14 is placed in contact with the filtering belt 100 and has the function of pressing the filtering belt 100 against the edges 4a of the walls 4, in particular against the gaskets 9. It is worth noting that, at the edges placed in contact with the walls 4, the conveyor belt 14 is impermeable. Such conveyor belt 14 if further arranged to be dragged by the rotation of the walls 4 of the first chamber 2.

In greater detail, the conveyor belt 14 is closed in a loop. The portion of the conveyor belt 14 which is external to the filtering area 7 is in any case inserted in the outer tank 12, such that possible leakages of the liquid soaking the conveyor belt 14 may be intercepted.

In further detail, the conveyor belt 14 is arranged on a pair of rollers 15a, 15b. In particular, a pair of first rollers 15a is arranged downward, at the inner tank 8, such that the conveyor belt can pass below the inner tank 8. A pair of second rollers 15b is also arranged at the sides of the inner tank 8, in particular near the filtering area 7, such that the conveyor belt 14 may pass though the filtering area 7 as previously described.

For moving the filtering belt 100, at least one of the mentioned second rollers 15b is motorised, in particular connected by suitable transmission means 23 to the first movement means 13 driving the walls 4, such to ease the synchronised movement of the walls 4 with the conveyor belt 14. Such transmission means 23 may comprise a gear chain, a transmission belt or any type of similar known transmission.

According to an embodiment of the present invention, the device 1 is provided with an unwinder roller 16 placed near the filtering area 7. Such unwinder roller 16 is arranged to unwind the filtering belt 100, in particular from the first roller 101 which, in use, is mounted on the unwinder roller 16. Preferably, the unwinder roller 16 is neutral.

The device 1 is further provided with a winder roller 17, which has the function of winding the filtering belt 100 extracting it out of the filtering area 7. While the device 1 is in function, the winding of the filtering belt 100 on the winder roller 17 defines the second previously mentioned roller 102.

In order to operate the winder roller 17, the device 1 comprises second movement means 18. In the preferred embodiment of the invention, the second movement means 18 are of the pneumatic type. In particular, the second movement means 18 comprise an air turbine 24. In further embodiments of the invention the second movement means 18 may be of any type.

It is worth noting that the second movement means 18 are regulated in such a way as to apply enough traction force to keep the filtrating belt 100 in tension, but below a breaking point. Furthermore, the second movement means 18 can be inverted such to ease the operator intervention in case the filtering belt 100 is wrongly wound on the winder roller 17.

## Claims

1. A filtering device (1) for liquids, comprising
- a first chamber (2) having an inlet opening (3) configured to receive liquid to be filtered, said first chamber (2) is defined at least in part by a pair of walls (4) configured to rotate around an axis of rotation (A), whereby the axis of rotation (A) joins centres of the walls (4) and is arranged perpendicular to both walls (4);
- a second chamber (5) having an outlet opening (6) configured to drain the filtered liquid, said second chamber (5) having a perimeter wall (10) placed at a filtering area (7) and circumferentially facing said walls (4) of said first chamber (2), the perimeter wall (10) comprising a grid (11) for the passage of the filtered liquid;
- the filtering area (7) is placed between the first (2) and the second chamber (5) and configured to receive a filtering belt (100), the axis of rotation (A) being oriented perpendicular to an advancement direction (B) of the filtering belt (100), said walls (4) each having a respective edge (4a) configured to be pressed tightly against said filtering belt (100) to drag said filtering belt (100);
- suction means active downstream of the outlet opening (6), the second chamber (5) being defined at least partially by an inner tank (8) arranged under the first chamber (2), the perimeter wall (10) being fluid-tightly connected to the inner tank (8)
**characterised in that** said grid (11) extends over a surface equal to or less than 50% of the perimeter wall (10).

2. Device (1) according to the preceding claim, **characterised in that** each of said walls (4) comprises a respective gasket (9) placed at the respective edge (4a), said gaskets (9) being configured to come into contact with said filtering belt (100).

3. Device (1) according to the any one of the preceding claims, **characterised in that** said second chamber (5) has at least two fastening areas (25) in which the perimeter wall (10) is fastened to the inner tank (8), said second chamber (5) comprising a pair of additional gaskets each placed at a respective fastening area (25).

4. Device (1) according to any one of the preceding claims, **characterised in that** it comprises first movement means (13) active on said walls (4) to rotate them around said axis of rotation (A).

5. Device (1) according to the preceding claim, **characterised in that** it comprises a conveyor belt (14) configured to be placed in contact with the filtering belt (100) and inserted in part in the filtering area (7), said conveyor belt (14 ) being permeable to the liquid to be filtered, said conveyor belt (14) being in particular at least partly positioned between the perimeter wall (10) of the second chamber (5) and the walls (4) of the first chamber (2).

6. Device (1) according to the preceding claim, **characterised in that** it comprises transmission means (23) connected to said first movement means (13) and configured to move said conveyor belt (14) at the same peripheral speed as the walls (4).

7. Device (1) according to any one of the claims 3 to 6, **characterised in that** it comprises an unwinder roller (16) configured to unwind a filtering belt (100) inside said filtering area (7) and a winder roller (17) adapted to wind said filtering belt (100) by extracting it from said filtering area (7).

8. Device (1) according to the preceding claim, **characterised in that** it comprises second movement means (18) active on said winder roller (17) to draw said filtering belt (100) from said filtering area (7).

9. Device (1) according to the preceding claim, **characterised in that** said second movement means (18) are of the pneumatic type and are configured to apply a traction force on said filtering belt below a breaking point.

## Patentansprüche

1. Filtervorrichtung (1) für Flüssigkeiten, umfassend
- eine erste Kammer (2) mit einer Einlassöffnung (3), die zum Aufnehmen von zu filternder Flüssigkeit konfiguriert ist, wobei die erste Kammer (2) zumindest teilweise durch ein Paar Wände (4) definiert ist, die dazu konfiguriert sind, sich um eine Drehachse (A) zu drehen, wobei die Drehachse (A) die Mittelpunkte der Wände (4) verbindet und senkrecht zu beiden Wänden (4) angeordnet ist;
- eine zweite Kammer (5) mit einer Auslassöffnung (6), die zum Ablassen der gefilterten Flüssigkeit konfiguriert ist, wobei die zweite Kammer (5) eine Umfangswand (10) aufweist, die an einem Filterbereich (7) angeordnet ist und in Umfangsrichtung den Wänden (4) der ersten Kammer (2) zugewandt ist, wobei die Umfangswand (10) ein Gitter (11) für den Durchtritt der gefilterten Flüssigkeit umfasst;
- der Filterbereich (7) zwischen der ersten (2) und der zweiten Kammer (5) angeordnet und dazu konfiguriert ist, einen Filterband (100) aufzunehmen, wobei die Drehachse (A) senkrecht zu einer Vorschubrichtung (B) des Filterbandes (100) ausgerichtet ist, wobei die Wände (4) jeweils einen Rand (4a) aufweisen, der dazu konfiguriert ist, fest gegen den Filterband (100) gedrückt zu werden, um das Filterband (100) zu ziehen;
- stromabwärts der Auslassöffnung (6) wirksame Saugmittel, wobei die zweite Kammer (5) zumindest teilweise durch einen unterhalb der ersten Kammer (2) angeordneten Innentank (8) begrenzt ist, wobei die Umfangswand (10) flüssigkeitsdicht mit dem Innentank (8) verbunden ist
**dadurch gekennzeichnet, dass** sich das Gitter (11) über eine Fläche erstreckt, die gleich oder kleiner als 50 % der Umfangswand (10) ist.

2. Vorrichtung (1) nach dem vorstehenden Anspruch, **dadurch gekennzeichnet, dass** jede der Wände (4) eine jeweilige Dichtung (9) umfasst, die an dem jeweiligen Rand (4a) angeordnet ist, wobei die Dichtungen (9) dazu konfiguriert sind, mit dem Filterband (100) in Kontakt zu kommen.

3. Vorrichtung (1) nach einem der vorstehenden Ansprüche, **dadurch gekennzeichnet, dass** die zweite Kammer (5) mindestens zwei Befestigungsbereiche (25) aufweist, in denen die Umfangswand (10) an dem Innentank (8) befestigt ist, wobei die zweite Kammer (5) ein Paar zusätzlicher Dichtungen umfasst, die jeweils an einem entsprechenden Befestigungsbereich (25) angeordnet sind.

4. Vorrichtung (1) nach einem der vorstehenden Ansprüche, **dadurch gekennzeichnet, dass** sie an den Wänden (4) wirksame erste Bewegungsmittel (13) umfasst, um diese um die Drehachse (A) zu drehen.

5. Vorrichtung (1) nach dem vorstehenden Anspruch, **dadurch gekennzeichnet, dass** sie ein Förderband (14) umfasst, das dazu konfiguriert ist, mit dem Filterband (100) in Kontakt zu kommen und teilweise in den Filterbereich (7) eingeführt zu werden, wobei das Förderband (14) für die zu filternde Flüssigkeit durchlässig ist, wobei das Förderband (14) insbesondere zumindest teilweise zwischen der Umfangswand (10) der zweiten Kammer (5) und den Wänden (4) der ersten Kammer (2) positioniert ist.

6. Vorrichtung (1) nach dem vorstehenden Anspruch, **dadurch gekennzeichnet, dass** sie Übertragungsmittel (23) umfasst, die mit den ersten Bewegungsmitteln (13) verbunden und dazu konfiguriert sind, das Förderband (14) mit derselben Umfangsgeschwindigkeit wie die Wände (4) zu bewegen.

7. Vorrichtung (1) nach einem der Ansprüche 3 bis 6, **dadurch gekennzeichnet, dass** sie eine Abwickelrolle (16) umfasst, die dazu konfiguriert ist, ein Filterband (100) innerhalb des Filterbereichs (7) abzuwickeln, und eine Aufwickelrolle (17), die angepasst ist, um das Filterband (100) aufzuwickeln, indem es aus dem Filterbereich (7) herausgezogen wird.

8. Vorrichtung (1) nach dem vorstehenden Anspruch, **dadurch gekennzeichnet, dass** sie auf die Aufwickelrolle (17) wirkende zweite Bewegungsmittel (18) umfasst, um das Filterband (100) aus dem Filterbereich (7) zu ziehen.

9. Vorrichtung (1) nach dem vorstehenden Anspruch, **dadurch gekennzeichnet, dass** die zweiten Bewegungsmittel (18) pneumatisch und dazu konfiguriert sind, eine Zugkraft auf das Filterband unterhalb einer Bruchstelle auszuüben.

## Revendications

1. Dispositif filtrant (1) pour liquides, comprenant
- une première chambre (2) présentant une ouverture d'entrée (3) configurée pour recevoir un liquide à filtrer, ladite première chambre (2) est définie au moins en partie par une paire de parois (4) configurées pour tourner autour d'un axe de rotation (A), selon lequel l'axe de rotation (A) rejoint les centres des parois (4) et est agencé perpendiculairement aux deux parois (4) ;
- une seconde chambre (5) présentant une ouverture de sortie (6) configurée pour évacuer le liquide filtré, ladite seconde chambre (5) présentant une paroi périphérique (10) placée au niveau d'une zone de filtration (7) et faisant face de manière circonférentielle auxdites parois (4) de ladite première chambre (2), la paroi périphérique (10) comprenant une grille (11) pour le passage du liquide filtré ;
- la zone de filtration (7) est placée entre la première chambre (2) et la seconde chambre (5) et configurée pour recevoir une bande de filtration (100), l'axe de rotation (A) étant orienté perpendiculairement à une direction d'avancement (B) de la bande de filtration (100), lesdites parois (4) présentant chacune un bord respectif (4a) configuré pour être pressé fermement contre ladite bande de filtration (100) pour faire glisser ladite bande de filtration (100) ;
- des moyens d'aspiration actifs en aval de l'ouverture de sortie (6), la seconde chambre (5) étant définie au moins partiellement par un réservoir interne (8) agencé sous la première chambre (2), la paroi périphérique (10) étant reliée de manière étanche aux fluides au réservoir interne (8) **caractérisé en ce que** ladite grille (11) s'étend sur une surface inférieure ou égale à 50 % de la paroi périphérique (10).

2. Dispositif (1) selon la revendication précédente, **caractérisé en ce que** chacune desdites parois (4) comprend un joint respectif (9) placé au niveau du bord respectif (4a), lesdits joints (9) étant configurés pour entrer en contact avec ladite bande de filtration (100).

3. Dispositif (1) selon l'une quelconque des revendications précédentes, **caractérisé en ce que** ladite seconde chambre (5) présente au moins deux zones de fixation (25) dans lesquelles la paroi périphérique (10) est fixée au réservoir interne (8), ladite seconde chambre (5) comprenant une paire de joints supplémentaires placés chacun au niveau d'une zone de fixation (25) respective.

4. Dispositif (1) selon l'une quelconque des revendications précédentes, **caractérisé en ce qu'**il comprend des premiers moyens de déplacement (13) actifs sur lesdites parois (4) pour les faire tourner autour dudit axe de rotation (A).

5. Dispositif (1) selon la revendication précédente, **caractérisé en ce qu'**il comprend une bande transporteuse (14) configurée pour être placée en contact avec la bande de filtration (100) et insérée en partie dans la zone de filtration (7), ladite bande transporteuse (14) étant perméable au liquide à filtrer, ladite bande transporteuse (14) étant en particulier au moins partiellement positionnée entre la paroi périphérique (10) de la seconde chambre (5) et les parois (4) de la première chambre (2).

6. Dispositif (1) selon la revendication précédente, **caractérisé en ce qu'**il comprend des moyens de transmission (23) reliés auxdits premiers moyens de déplacement (13) et configurés pour déplacer ladite bande transporteuse (14) à la même vitesse périphérique que les parois (4).

7. Dispositif (1) selon l'une quelconque des revendications 3 à 6, **caractérisé en ce qu'**il comprend un rouleau dérouleur (16) configuré pour dérouler une bande de filtration (100) à l'intérieur de ladite zone de filtration (7) et un rouleau enrouleur (17) conçu pour enrouler ladite bande de filtration (100) en l'extrayant de ladite zone de filtration (7).

8. Dispositif (1) selon la revendication précédente, **caractérisé en ce qu'**il comprend des seconds moyens de déplacement (18) actifs sur ledit rouleau enrouleur (17) pour tirer ladite bande de filtration (100) de ladite zone de filtration (7).

9. Dispositif (1) selon la revendication précédente, **caractérisé en ce que** lesdits seconds moyens de déplacement (18) sont du type pneumatique et sont configurés pour appliquer une force de traction sur ladite bande de filtrage inférieure à un point de rupture.
